# EUROPEAN PATENT APPLICATION

(11) **EP 3 928 623 A1**
(43) Date of publication of application: **29.12.2021**
(21) Application number: 20182689.8
(22) Date of filing: 26.06.2020
(51) Int. Cl.: A23B 4/052

(54) **A DEVICE FOR GENERATING SMOKE FOR SMOKING FOOD OR DRINK PRODUCTS**

(71) Applicant: SWPS Uniwersytet Humanistycznospoleczny, 03-815 Warszawa (PL); Zadfar, Ladan, 60-750 Poznan (PL); Farshad, Mohammad, 60-750 Poznan (PL)
(72) Inventor: Zadfar, Ladan, 60-750 Poznan (PL); Farshad, Mohammad, 60-750 Poznan (PL)
(74) Representative: AOMB Polska Sp. z.o.o.

(57) **Abstract**

The invention relates to the food and drink industry, in particular to smoking devices intended for smoking food and drink products.

The invention is directed to a device for generating smoke for smoking foods and drinks comprising a heating part and a capsule part pivotally connected to each other in such a way that when the device is closed, the housing forms a closed cavity having an air inlet and smoke outlet.

The invention is also directed to a capsule for a device for generating smoke for smoking food or drinks.

## Description

### Technical field

The invention relates to the food and drink industry, in particular to smoking devices intended for smoking food and drink products.

### Background art

Smoking is the process of flavoring, browning, cooking, or preserving food by exposing it to smoke from burning or smoldering material, most often wood. Meat, fish, and lapsang souchong tea are often smoked.

The smoking of food likely dates back to the paleolithic era. Through the centuries people used to construct different devices to carry out this process. Even nowadays smoking devices are known. However, they are only meant for direct burn of wood by hand, which is not clean and not safe for use inside the house.

### Summary of the invention

The goal of the present invention is to provide the device which enables to carry on the procedure of smoking food in an automatic and clean way.

The invention relates to device for generating smoke for smoking foods and drinks comprising:
- a housing,
- a heating part and a capsule part pivotally connected to each other in such a way that when the device is closed, the housing forms a closed cavity having an air inlet and smoke outlet,
   wherein the heating part comprises:
   ∘ an air passage for connecting the outside of the device with a capsule placed in the capsule part,
   ∘ an air pump for pumping the air from the outside of the device into the capsule,
   ∘ a heating means for heating said air before reaching the capsule,
   ∘ a cutting means for cutting the holes in the capsule top cover when the device is closed,
   and wherein the capsule part comprises a capsule socket and the smoke outlet,
- and a source of energy for supplying the air pump and the heating means.

Preferably the device further comprises a means for controlling the temperature of the heating means.

Preferably the device further comprises a means for controlling the pressure inside the air passage.

Preferably the air passage comprises a safety valve.

Preferably the device further comprises a button for controlling the heating means and the air pump.

Preferably the device further comprises wherein a part of the air passage is in form of a spiral tube and the heating means are placed inside the tube.

Preferably a part of the housing of the heating part together with a part of the housing of the capsule part forms an elongated handle.

Preferably a rechargeable battery is placed inside the device handle.

The invention relates also to a set of the device comprising a battery and a charger for charging the battery, wherein the device further comprises charger connecting point for connecting batteries with a charger, placed on the bottom part of the capsule part and the charger comprises a charger table of substantially flat shape with a hole for receiving of the capsule part.

The invention relates also to a capsule for a device for generating smoke for smoking food or drinks, having a shape of a cup covered with a top cover thus forming a chamber for ingredients, wherein the bottom part of the inside wall of the capsule forms a slope for directing the smoke towards the top cover.

This device helps the consumer have access to variety of smoke scents in an easy, clean and functional way inside the house. By just pressing one button, hot air will enter into the installed capsule and it will cause a smooth burn of natural contents of the capsule and the smoke will be driven to the food or drink. The device could be used in cooking and making drinks.

The device enables to make the food smoked with lots of different materials and create a whole new taste and scent. As the taste differences around the world therefore the device is flexible when it comes to the matter of usability in different regions It is also designed for people who like to experience new tastes, as the capsules can come in mixed and single ingredients.

The presented invention also has much healthier impact compared to other devices because of the smooth burning procedure and the fact that the burn is caused with hot air and not direct fire. It is also important to mention that the recycling process is much easier.

### Brief description of drawings

The invention is depicted in the exemplary embodiment on the drawings, wherein figures present:
- Fig. 1: - schematic view of the idea of the invention
- Fig. 2: - a top view (a), a bottom view (c) and a side views (b,d) of an exemplary device
- Fig. 3: - a top perspective view of the device
- Fig. 4: - a perspective view of the device from the side of a hinge
- Fig. 5: - a perspective view of the open device and enlarged detail
- Fig. 6: - a cross-sectional view of two details
- Fig. 7: - a heating element in the device
- Fig. 8: - a cross-sectional view of the device
- Fig. 9: - a different views of capsule
- Fig. 10: - a top view (a), a side view (b) and a perspective view (c) of a charger
- Fig. 11: - a perspective view of the device in the charger
- Fig. 12: - a cross section of a capsule placement

### Detailed description

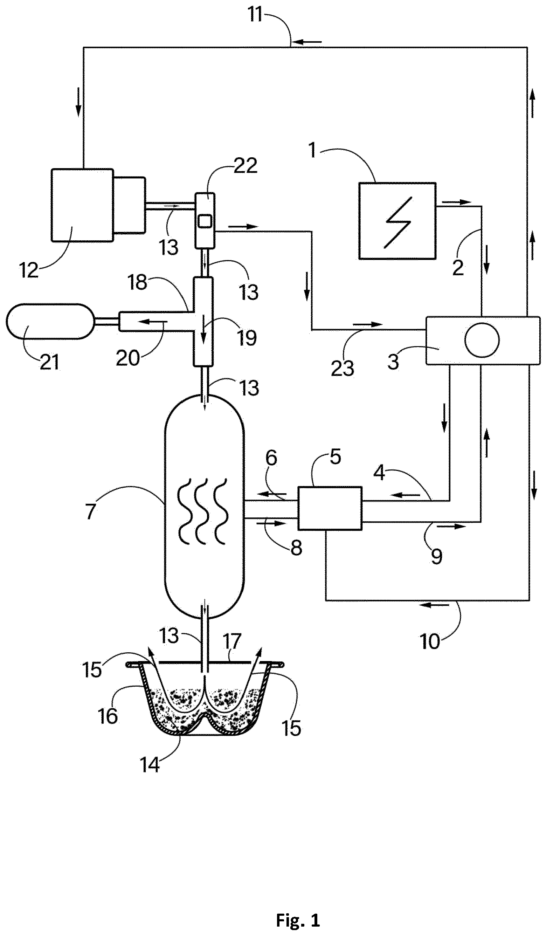

Fig. 1 shows a schematic view of the idea of the invention. The device comprises an air pump 12 that pumps the air form the outside of the device, through an air passage 13 into the capsule 16 comprising ingredients for producing smoke (for example pieces of dried onion, paprika, tomato and/or mushroom). The air is heat up by a heating means 7, therefore when it reaches the capsule it causes a smooth burn of natural contents of the capsule. The smoke leaves the capsule through the holes in a top cover of a capsule 16.

The device comprises also a thermometer 5 and a barometer 22 for monitoring the temperature of the heating means and the pressure within the air passage 13.

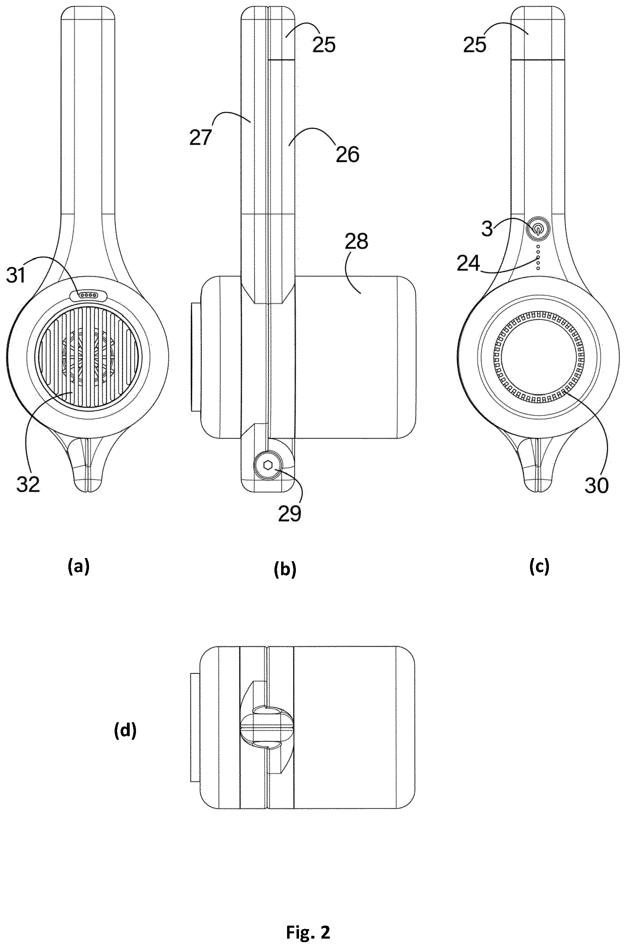

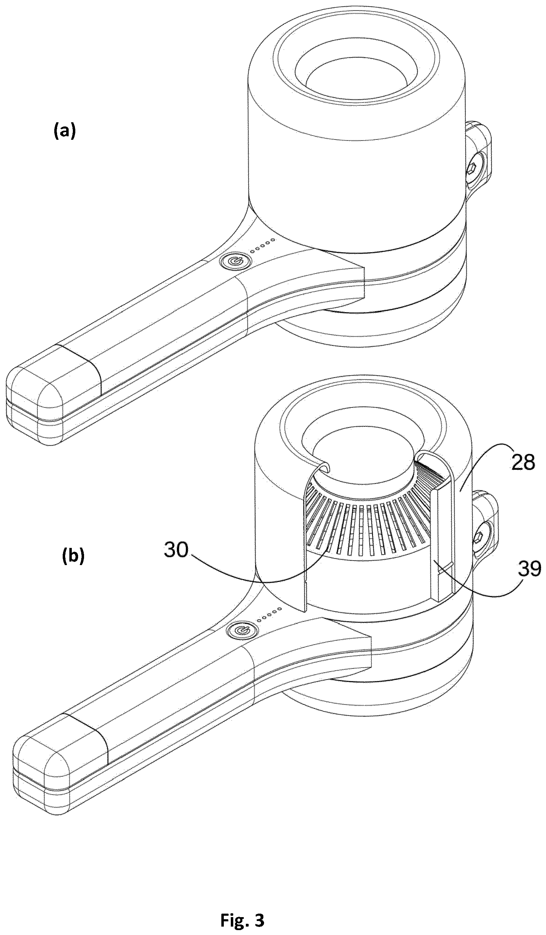

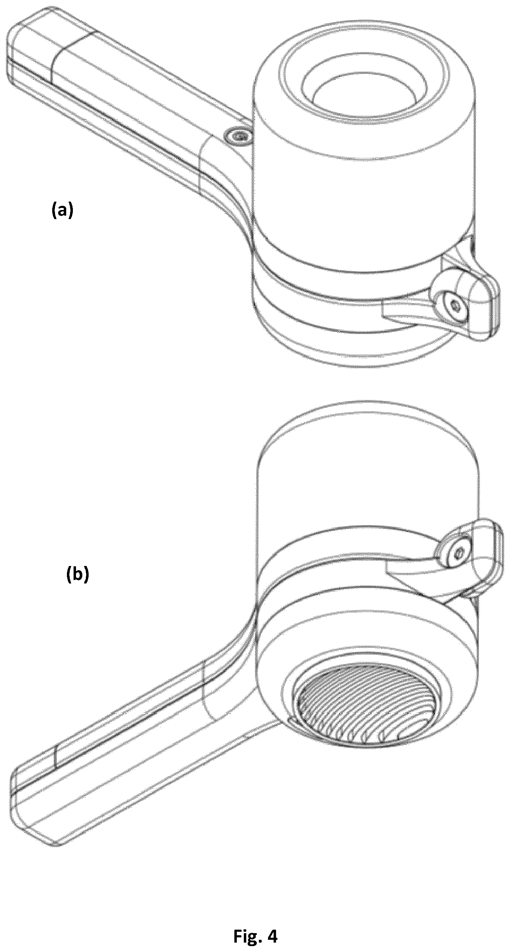

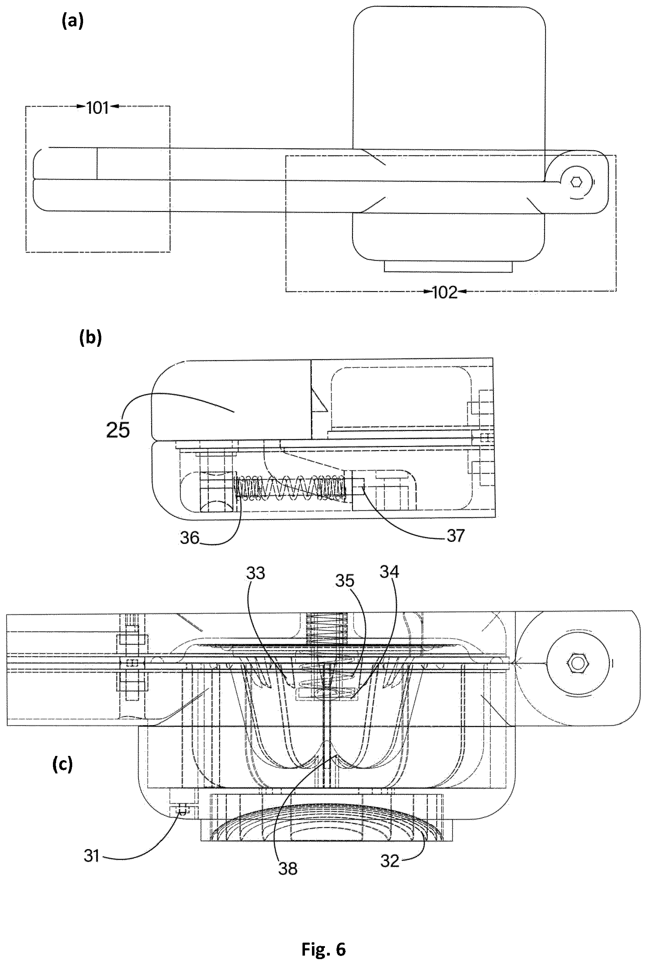

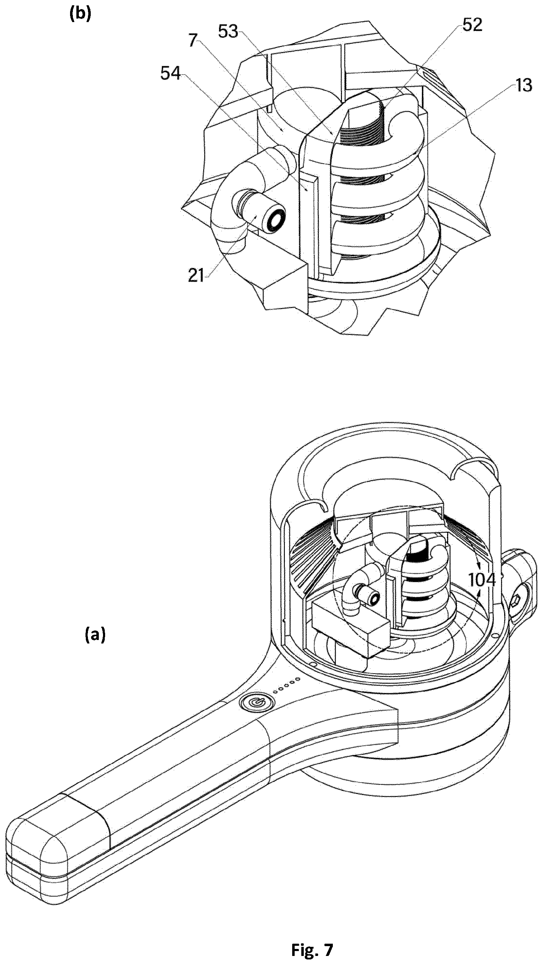

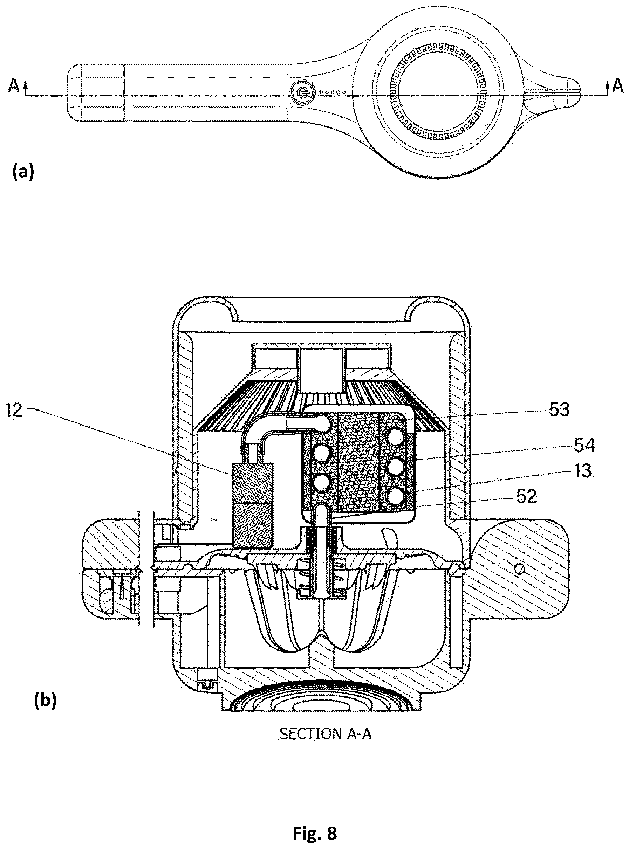

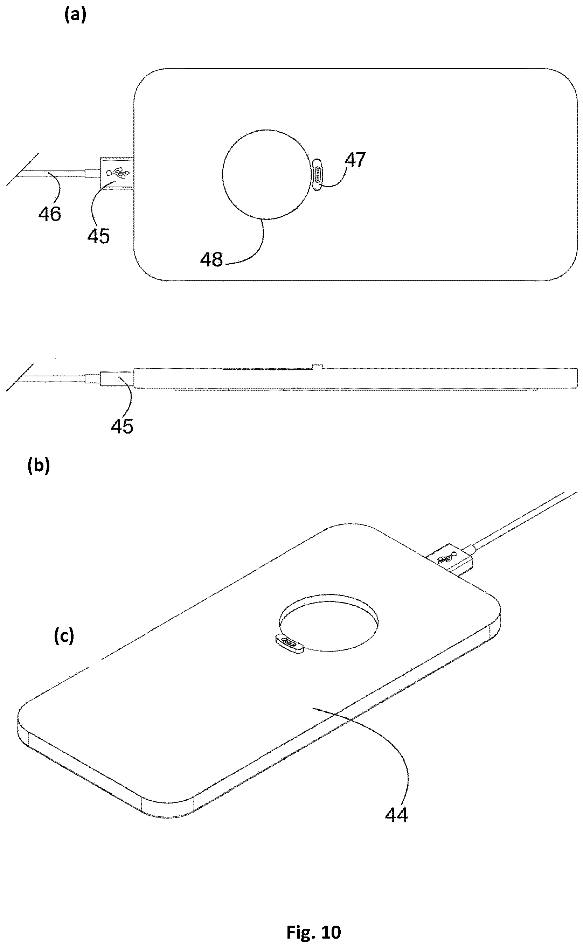

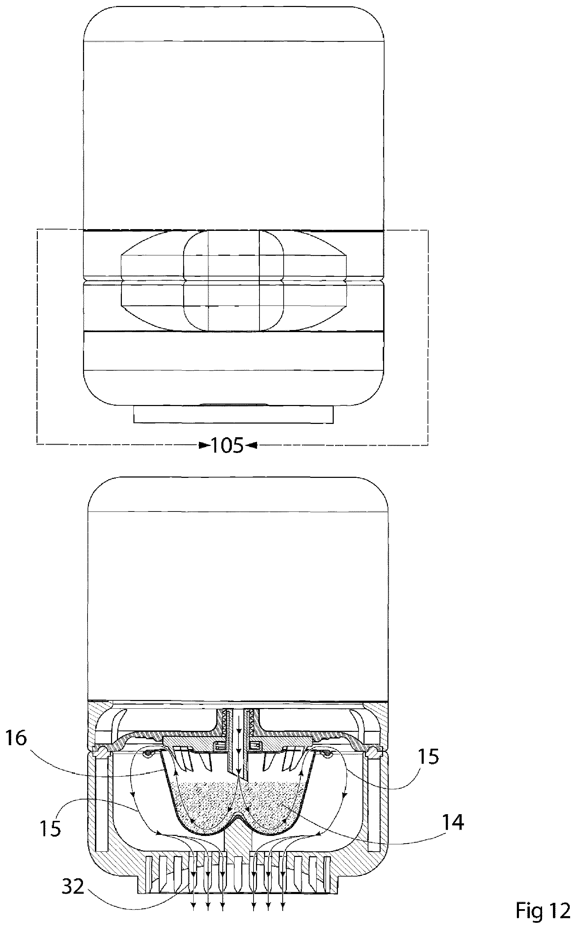

Figs. 2-12 shows an exemplary embodiment of the invention.

The device comprises a heating part (top part) and a capsule part (bottom part) pivotally connected to each other in such a way that when the device is closed, the housing forms a closed cavity having an air inlet and a smoke outlet. The device is of substantially cylindrical shape, wherein a part of the housing of the heating part together with a part of the housing of the capsule part forms an elongated handle. On the top of a heating part the air inlet grooves 30 are formed. On the bottom of the capsule part a smoke outlet 32 is formed.

The heating part comprises an air pump 12 that pumps the air form the outside of the device, through an air passage 13 and a heating means 7. The heating means comprises a heating element 52, a refractory ceramic 53 for retaining the heat of the heating element 52. The space between the refractory ceramic and the outer wall of the heating furnace is filled with refractory cotton 54, in order to prevent energy loss and also to prevent heating up the device's body. The temperature of the heating element is monitored by a thermometer 5.

A part of the air passage is in form of a spiral tube surrounding the heating element 52. The air passage is ended with a sharp end, which is substantially perpendicular to the top cover of the capsule when the device is closed with the capsule inside.

The hating part comprises also a barometer (22) and a safety valve (21) in case during operation the air pressure in the device exceeds a safe level.

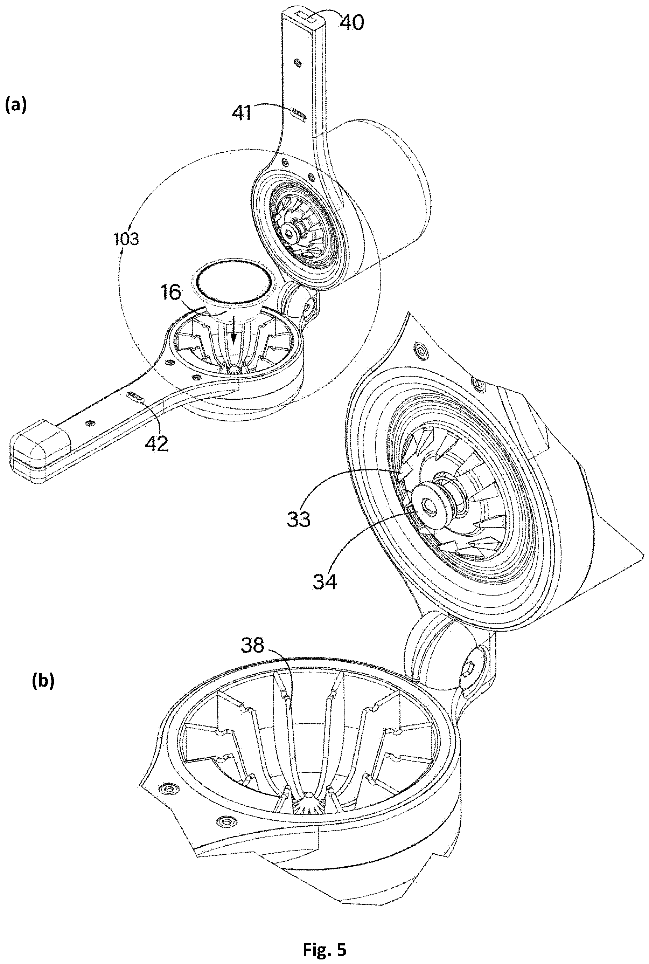

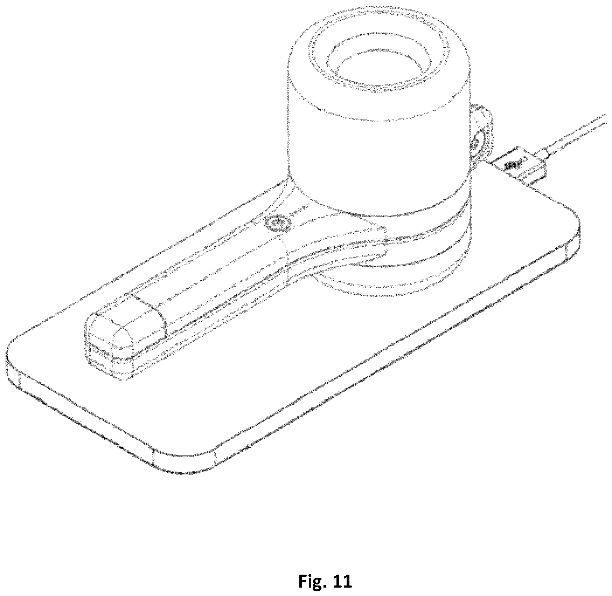

After opening the device (see fig. 5), the capsule 16 can be placed int the capsule part. The capsule is placed with it's top cover facing heating part. When the device is closed, a twelve headed blade 33, placed on the heating part, cuts through the capsule top cover and creates an outlet for smoke to come out. At the same time, a sharp end of air passage 13 cuts through the capsule top cover to create a hot air inlet into the capsule (see fig 11).

The device has a rechargeable battery which is placed inside the device handle and in order to charge the battery a charger is designed in a mode to be adaptable with any kitchen style and it can be simply used.

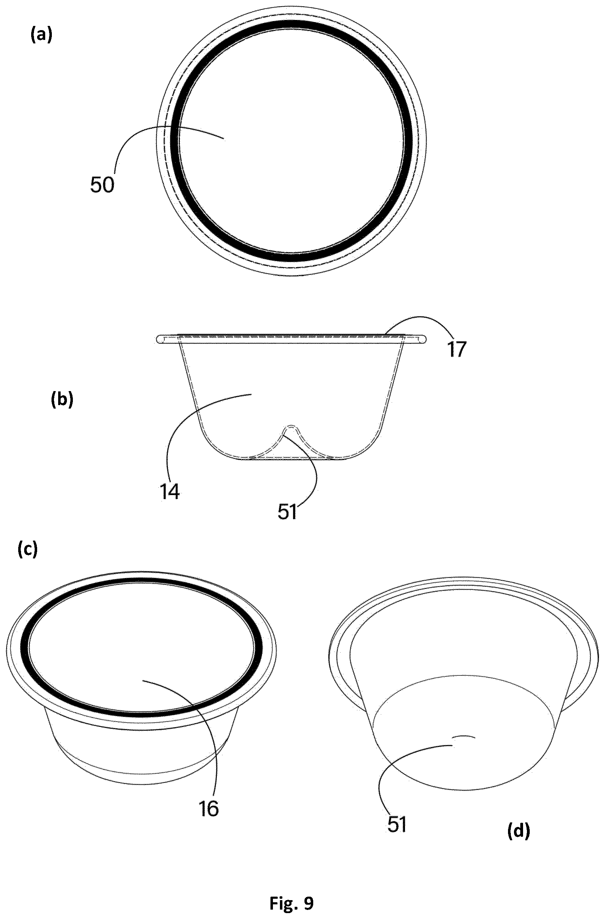

Fig. 9 shows the capsule 16 having a shape of a cup covered with a top cover thus forming a chamber for ingredients, wherein the bottom part of the inside wall of the capsule forms a slope for directing the smoke towards the top cover. The form is intended to improve the uniform combustion of the material inside the capsule. There is a depression in the bottom center of the capsule, which helps to integrate air into the capsule from the center to the perimeter.

### How the device operates

First step is to open the device using the device slider lock 25 and put the capsule inside the capsule placement in the device. Then the lid of the device is closed and when it is closed, the blade 33 and the sharp end of the air passage 13 of the capsule placement cut through the capsule top cover and makes a path for air and smoke.

After installing the capsule, the device is placed on the charger's table. By pressing the LED button on the device, the device is activated, the electric current activates the heating element inside the heating furnace and it begins to heat up. After heating up to a predefined temperature, which is defined for the device, the heating element stops working and the thermometer activates the device's blue LED. At this point the device needs the user's confirmation to continue.

The confirmation happens when the user presses the button and by pressing the button, the heating element and the pressure pump will activate at the same time. The heating element only activates when the general temperature is lower than it is defined for the device. The pressure pump pumps the air into the heating furnace and the air heats up by passing through a spiral tube and finally enters into the capsule causing a smooth burn of natural contents of capsule and pumping out the smoke through the smoke output. There is a slope shape inside the capsule which helps the smoke movement from inside to outside. The smoke leaves the device by the smoke outlet and can be directed toward a food or drink.

For the safety reasons, while the device is connected to the charger table, the device is prevented from pumping the air. If the confirmation has been done, as long as the device is connected it will not start working, even if the user picks up the device and it starts working by putting it back on the charger table it will stop.

To turn off the device the user needs to push the bottom and the device will stop working. For safety purposes, there is a safety valve and a barometer inside the housing. If the pressure inside the device faces any complications or there is a problem with the pipes, the device immediately stops the pressure pump and the safety valve starts working. In such cases, the red LED will start flashing and the device will turn off.

To put out the capsule or change it, the user should pull the slider lock and after opening the device there is a release plate which compresses when the device closes and it decompresses when the device is opened and this piece helps to detach the capsule from the twelve headed blade to be put out.

### Reference numbers list:

1-Energy source
2- Energy output
3- LED button
4- Input to thermometer
5- Thermometer
6- Input to heating element
7- Heating furnace
8- Output from heating element
9- Output from thermometer
10- Output from LED button
11- Input to pressure pump
12- Pressure pump
13- air passage
14- Capsule's ingredients (content)
15- Smoke output
16- Capsule
17- Capsule's top cover which opens in certain places just by installing it inside the device
18- Three -way valve
19- Main air output inside the three-way valve
20- Subsidiary air output which activates in case the air pressure inside increases and causes difficulty in the operation process
21- Safety valve
22- Barometer
23- Output from barometer, it just operates in case the pressure inside increases and causes difficulty in the operation
24- Battery charge display
25- The device slider lock that opens and locks by moving horizontally
26- The upper part of device handle
27- The lower part of device handle
28- The device housing which contains main parts
29- The connection point and rotate axis of upper and lower parts of the device
30- Air inlet grooves
31- Charger connecting point of the device
32- Smoke outlet
33- Twelve headed blade which cut through the capsule top cover and creates an outlet for smoke to come out.
34- Release plate which compresses when the device closes and it decompresses when the device is opened and helps to detach the capsule from the twelve headed blade
35- The release plate spring
36- The slide lock spring
37- Axis of spring movement
38- Capsule placement inside the device
39- Internal wall of the housing
40- The Mortise part of the slider lock
41- The Mortise part of electronic connection between upper and lower parts of the device
42- The Tenon part of electronic connection between upper and lower parts of the device
43- The 3D image of the device from different perspective points of view
44- The device charger's table where the device is placed to be charged
45- USB connector which connect the device charger's table to power adapter
46- Power adapter's wire
47- The connecting point of the charger which connects the device and charger
48- The device placement on the charger
49- A view of the device on the charger
50- The top view of the capsule
51- The inside slope of the capsule that is designed to help the smoke movement from inside to outside
52- Heating element
53- Refractory ceramics
54- Refractory cotton
101- Detail of the slider lock section
102- Detail of the capsule placement section
103- Detail of the inside view of the device
104- Details inside the housing
105- Details of capsule placement

## Claims

1. The device for generating smoke for smoking foods and drinks comprising:
• a housing,
• a heating part and a capsule part pivotally connected to each other in such a way that when the device is closed, the housing forms a closed cavity having an air inlet and smoke outlet,
wherein the heating part comprises:
∘ an air passage for connecting the outside of the device with a capsule placed in the capsule part,
∘ an air pump for pumping the air from the outside of the device into the capsule,
∘ a heating means for heating said air before reaching the capsule,
∘ a cutting means for cutting the holes in the capsule top cover when the device is closed,
and wherein the capsule part comprises a capsule socket and the smoke outlet,
• and a source of energy for supplying the air pump and the heating means.

2. The device according to claim 1, comprising a means for controlling the temperature of the heating means.

3. The device according to claim 1 or 2, comprising a means for controlling the pressure inside the air passage.

4. The device according to claim 1 or 2 or 3, wherein the air passage comprises a safety valve.

5. The device according to any of the preceding claims, comprising a button for controlling the heating means and the air pump.

6. The device according to any of the preceding claims, wherein a part of the air passage is in form of a spiral tube and the heating means are placed inside the tube.

7. The device according to any of the preceding claims, wherein a part of the housing of the heating part together with a part of the housing of the capsule part forms an elongated handle.

8. The device according to claim 7, wherein a rechargeable battery is placed inside the device handle.

9. A set of the device according to claim 8 and a charger for charging the battery, wherein the device further comprises charger connecting point for connecting batteries with a charger, placed on the bottom part of the capsule part and the charger comprises a charger table of substantially flat shape with a hole for receiving of the capsule part.

10. A capsule for a device for generating smoke for smoking food or drinks, having a shape of a cup covered with a top cover thus forming a chamber for ingredients, wherein the bottom part of the inside wall of the capsule forms a slope for directing the smoke towards the top cover.
